# EUROPEAN PATENT APPLICATION

(11) **EP 3 858 494 A1**
(43) Date of publication of application: **04.08.2021**
(21) Application number: 21153029.0
(22) Date of filing: 22.01.2021
(51) Int. Cl.: B05D 1/26, B05D 1/40, B60J 10/00, B60J 10/90, B60R 13/02, F16J 15/14, B62D 27/04

(54) **GLUING OF ELEMENTS**

(30) Priority: 31.01.2020 BE 202005062
(71) Applicant: Exypnos BVBA, 9150 Kruibeke (BE)
(72) Inventor: VAN DYCK, Johan Ria Hugo, 2900 Schoten (BE); LANGIE, Stijn Jozef Elvire, 9080 Lochristi (BE)
(74) Representative: Arnold & Siedsma

(57) **Abstract**

Auxiliary piece (3) for gluing a first element (1) and a second element (2) in a predetermined relative position, wherein the auxiliary piece (3) is formed to delimit a portion of a gluing zone such that, after the first element (1) and the second element (2) have been placed in the predetermined relative position and the auxiliary piece (3) has been placed thereon, a cavity (5) is delimited by the first element, the second element and the auxiliary piece, wherein the auxiliary piece has a channel (4) which extends from the cavity (5) to the outside such that a glue injector is able to introduce the glue into the cavity (5) from outside via the channel (4), wherein the auxiliary piece is manufactured from a material with a hardness lower than 50 Shore D.

## Description

The invention relates to the gluing of a first element and a second element.

WO 2018/177636 describes a method for producing a seal between two roof frame elements. The roof frame elements form the first element and the second element. These elements are placed in a predetermined position relative to each other. Applied between the two elements is a compound which connects the two elements at least partially to each other and which forms the seal. In this description such a compound is also referred to as a glue because a bond is created, directly or indirectly, between the compound and the element. A significant advantage of such a seal is that it connects well against the first element and the second element. The curing time of the compound and the option of automated application of the compound have also been found advantageous. A drawback is that the dimensional applicability is limited.

It is an object of the invention to provide an auxiliary piece and method which improve the gluing of the first element and the second element.

For this purpose the invention provides an auxiliary piece for gluing a first element and a second element in a predetermined relative position, wherein the auxiliary piece is formed to delimit a portion of a gluing zone such that, after the first element and the second element have been placed in the predetermined relative position and the auxiliary piece has been placed thereon, a cavity is delimited by the first element, the second element and the auxiliary piece, wherein the auxiliary piece has a channel which extends from the cavity to the outside such that a glue injector is able to introduce the glue into the cavity from outside via the channel, wherein the auxiliary piece is manufactured from a material with a hardness lower than 50 Shore D.

The invention is based on the insight that dimensional applicability is affected by the flowability of the glue. The glue will typically only fill an open, cup-like or slotted space between the first element and the second element when the cup or slot lies horizontally. By providing the auxiliary piece the location where glue is applied to the first and second element can be chosen substantially freely. It is hereby no longer necessary for the cup or slot to lie horizontally. This considerably increases the applicability.

The invention is further based on the insight that the form of the first element and of the second element, and their relative position, can have variations relative to a theoretical form and/or relative position. These variations can be accommodated by the auxiliary piece in simple manner in that the auxiliary piece is manufactured from a material with a hardness lower than 50 Shore D. This hardness implies some flexibility of the auxiliary piece. On one hand this allows the auxiliary piece to be positioned against a first element and a second element, even when they have a form or relative position which varies to some extent from their theoretical form or relative position. On the other hand this allows limits to the flowability of the glue to be set at least partially by the auxiliary piece. A combination hereof allows the auxiliary piece to be placed on the first element and the second element, such that a cavity is delimited by the combination of the first element, the second element and the auxiliary piece. This cavity can be filled with glue. The position of the glue can thus be controlled fully, regardless of where on the first and second element it is arranged. Gluing is thereby possible in a considerably wider context and in a broader application.

Provided in the auxiliary piece is a channel which extends between the cavity and an outer side. This allows a glue injector to be connected to the channel so that glue can be introduced via the channel into the cavity. A surprising advantage is that the elasticity of the auxiliary piece has also been found to be advantageous in connecting of the injector to the channel. Because the auxiliary piece is manufacturer from a material with a hardness lower than 50 Shore D, the auxiliary piece will have a tendency to deform when the injector is pressed against the auxiliary piece at the position of the channel. The injector will hereby be able to be connected to the channel in extremely simple manner and without special couplings. More specifically, the injector can be pressed at least partially into the channel. Due to the hardness of the material of the auxiliary piece, the channel will deform and connect closely around the injector. An airtight or watertight or gluetight coupling is thus obtained between the channel and the glue injector. The channel is formed as a bore or similar cavity, through the body of the auxiliary piece, from one wall or surface of the auxiliary piece to another wall or surface of the auxiliary piece. The channel is formed round an axis which extends in a predetermined direction. This direction is deemed the direction in which the channel extends. The channel preferably extends in a direction from an outer surface of the auxiliary piece, wherein the direction lies at an angle to the outer surface which is greater than 10°, preferably greater than 45°, more preferably greater than 60°, most preferably about 90°. Application of the auxiliary piece according to the invention for making a seal between two roof panels allows a seal with a flat upper side or upper side with a predetermined other form to be formed over a join between two roof panels, even when the join has a complex three-dimensional form. By manufacturing the auxiliary piece from a material with a hardness lower than 50 Shore D a low-pressure glue injection system will typically be used. Low-pressure glue injection systems are already applied in roof systems for cars, as described in EP2799201. The same glue injection system can be applied for an adhesion according to the invention. This entails an economic advantage since it becomes possible to perform multiple actions in the same station with the same physical system.

The channel preferably takes an at least partially conical form so that the opening to the outside has a greater diameter than the opening to the cavity. Giving the opening a conical form considerably simplifies connection of a glue injector. Owing to the conical form it will be possible to accommodate variations in the optimal position of the auxiliary piece more easily, so that the glue injector can be moved to the auxiliary piece and connected to the channel optimally in an automated manner. The conical form extends relative to the axis of the channel.

The auxiliary piece is preferably manufactured from a material with a hardness lower than 90 Shore A, preferably lower than 75 Shore A, more preferably lower than 60 Shore A, most preferably lower than 50 Shore A. Manufacturing the auxiliary piece from a soft material, or a more elastic material, increases the capacity of the auxiliary piece to adapt to variations in form and relative position of the first and second elements.

The auxiliary piece is preferably formed so that the cavity has air outlet openings which are positioned in a zone lying opposite the channel. Glue can then be introduced via the channel into the cavity and air can leave the cavity via the air outlet openings. By forming the air outlet openings in a zone opposite the channel the glue will typically fill the cavity progressively and push the air out through the outlet openings.

The auxiliary piece preferably comprises two parts for clamping the first element and second element at least partially between the two parts. Such an auxiliary piece has an intended application which is different than or at least varies from the one described above, and allows the elements to be positioned and clamped relative to each other via the two parts of the auxiliary piece. In the above described application the two elements can already be mechanically connected to each other, for instance by welding or by a bolt connection, and the glue layer will form only a secondary connection in an embodiment. This secondary connection can function as seal. This secondary connection further preferably functions as leveller for levelling a surface of the assembly of the first and second element. This levelled surface can be further incorporated in a structure, for instance a roof of a vehicle, in simple manner. When the auxiliary piece comprises two parts, the first element and the second element can be clamped between the two parts. This allows for instance a connector to be glued to a window pane, wherein the glue has the primary function of physically connecting the elements. This is one specific application where a two-part auxiliary piece has considerable advantages. The skilled person will appreciate that many applications can be envisaged, and that the invention is not limited to the applications stated in the description.

The first element preferably has a plate-like segment with two opposite sides, wherein a first of the sides at least partially defines the cavity, and wherein the plate-like segment has an opening which extends between the opposite sides, wherein the auxiliary piece is provided to lie against a second of the sides and wherein the channel lies in line with the opening so that glue can flow via the channel and via the opening into the cavity. In this embodiment the opening forms an extension of the channel in the auxiliary piece, such that the channel and the auxiliary piece together extend between the cavity and the outside. The channel and the auxiliary piece extend here between the outside and the plate-like segment of the first element, and the opening extends through the plate-like segment such that the glue can flow via the channel and then via the opening into the cavity. The auxiliary piece thereby facilitates on the one hand the application of the glue between the elements. On the other hand the auxiliary piece delimits boundary areas between the first element and the second element, such that a cavity is defined.

The auxiliary piece preferably comprises a cavity zone which is formed by a portion of the outer surface of the auxiliary piece, which cavity zone delimits a portion of the cavity, which cavity zone is wholly surrounded by a connecting zone with a predetermined minimum width, which connecting zone is formed to lie closely against the first element and the second element. Because the cavity zone, which delimits a portion of the cavity, is wholly surrounded by a connecting zone, flowability of the glue will be fully controllable. This is because flowability of the glue will always be delimited by the first element, the second element or the cavity zone of the auxiliary piece. Owing to the connecting zone with predetermined minimum width, the auxiliary piece will connect against the first element and the second element so as to reduce leakage.

The invention further relates to a device comprising an auxiliary piece according to the invention, wherein the device comprises:
- a holder for holding the first element and the second element in the predetermined relative position and for holding the auxiliary piece for the purpose of delimiting the cavity; and
- a glue injector which is movable toward the channel in order to introduce glue via the channel into the cavity.

The glue injector is preferably movable via a robot arm. This allows automatic positioning of the injector toward the channel and further allows automatic injection of glue. The holder is further preferably automated and for instance provided with automatic supply means and positioning means for first and second elements for placing the first and the second element in the predetermined position in the holder. An automatic positioning of the auxiliary piece is preferably also provided. An automatic removal of the first and second element is further preferably provided, after the glue has been applied.

The device preferably further comprises a pressing unit for pressing the auxiliary piece against the first element and the second element. By pressing the auxiliary piece it can be ensured that the auxiliary piece connects substantially wholly correctly against the first and the second element so that the cavity is closed. This means that the cavity does not have any undesirable leaks. In this context it is noted that an air outlet opening is not deemed a leak, or at least not an undesirable leak.

The device preferably further comprises a glue feed unit for feeding the glue to the glue injector, wherein the glue comprises a compound with a dynamic viscosity, measured at a shear rate of 1/s, lower than 35,000 mPa.s when it comes to lie on at least a part of the first and second element. This compound is known as a hyperfluid material. Such a hyperfluid material is typically applied in an open mould and is known to fill the mould easily and wholly, into its smallest openings. The hyperfluid material lies closely against the edges of the mould.

The invention further relates to a method for applying glue, comprising the steps of:
- positioning a first element and a second element in a predetermined relative position;
- placing an auxiliary piece manufactured from a material with a hardness lower than 50 Shore D on the first element and the second element, such that a cavity is delimited by the first element, the second element and the auxiliary piece;
- moving a glue injector toward a channel of the auxiliary piece, which channel extends between the cavity and the outside, in order to connect the glue injector to the channel.

The method according to the invention preferably further comprises of pressing the auxiliary piece against the first element and the second element before filling the cavity with glue.

The invention will now be further described on the basis of an exemplary embodiment shown in the drawing.

In the drawing:
figure 1 shows a representation of the invention according to a first embodiment;
figure 2 shows a representation of a multiple embodiment of the first embodiment;
figure 3 shows a connection of a glue injector to a channel of an auxiliary piece according to a preferred embodiment of the invention;
figure 4 shows a cross-section of an auxiliary piece according to an embodiment of the invention;
figure 5 shows a representation of a further embodiment of the invention.

The same or similar elements are designated in the drawing with the same reference numerals.

Silicone rubber is applied for many different types of product. The invention relates to an auxiliary piece of silicone rubber which functions as a mould. A silicone rubber mould is applied in the so-called WST or WST+ technology, which is described in EP 2799201.

The two-component silicone rubber is preferably of the type that vulcanizes at room temperature. Such two-component silicone rubbers are known on the market, for instance under the brand name Elastosil® from the company Wacker. The A-component comprises the resin and is typically viscous. More specifically, the A-component has a viscosity at 23°C of between 15,000 mPa·s and 45,000 mPa·s. The B-component is the hardener, preferably the component which provides for the vulcanization reaction of the resin, and is typically liquid. The A-component and B-component are preferably chosen such that the final product has a hardness as described above or preferably a hardness lying between 35 Shore A and 50 Shore A. The skilled person will appreciate that an A-component and B-component which are suitable for vulcanization at room temperature can be chosen on the market with a view to achieving a predetermined hardness in the final product.

In the invention an auxiliary piece is manufactured from such a silicone rubber. The skilled person will appreciate that equivalent materials can be opted for, more specifically materials having a hardness as defined above. The auxiliary piece forms together with a first element and a second element, as described at length below, a cavity. This cavity is filled with a glue. In this description the word glue and the word compound are used interchangeably. The glue or the compound has a dynamic viscosity, measured at a shear rate of 1/s, lower than 35,000 mPa·s when it comes to lie on at least a part of the wall of the cavity.

The compound is preferably a hyperfluid material as described above, which cures. In this context the first element, the second element and the auxiliary piece together form a cavity in which the compound is applied. The curable compound can be a non-thixotropic (Newtonian) or a thixotropic (non-Newtonian) material or fluid. In order to be able to obtain a good surface quality without having to exert too high pressure on the curable compound during the application, the curable compound has a dynamic viscosity, measured a shear rate of 1/s, lower than 100,000 mPa·s, preferably lower than 75,000 mPa·s, more preferably lower than 35,000 mPa·s and most preferably lower than 10,000 mPa·s when applied on at least a portion of the mould surface (for Newton fluids the dynamic viscosity is not subject to the shear rate and can be determined as according to ASTM D445-03). The curable compound preferably has this dynamic viscosity at a temperature lower than 80°C, more preferably at a temperature lower than 60°C, most preferably at a temperature lower than 50°C. The lower the viscosity, the better the surface quality.

In this respect the curable compound has a dynamic viscosity which is preferably even lower than 10,000 mPa·s, more preferably even lower than 5000 mPa·s and most preferably even lower than 2000 mPa·s when it comes to lie on the mould surface, i.e. when the compound comes into contact with a wall of the cavity. In order to achieve such viscosities a suitable formulation can first of all be chosen for the curable compound. The dynamic viscosity of a specific formulation can moreover be reduced by increasing the temperature of the curable compound. The curable compound can for instance be applied at room temperature. In order to accelerate the curing reaction the curable compound can however also be applied at a higher temperature, for instance at 65°C, on a non-heated surface or on a surface heated to for instance 45°C.

In this respect it is preferred that the curable compound is applied and is given time to cure until the connection is realized, i.e. until the compound in the filled cavity no longer has a tendency to permanently deform when the first element, the second element and/or the auxiliary piece is manipulated, more particularly without exerting a pressure higher than 500 mbar in the closed cavity, preferably without exerting a pressure higher than 350 mbar in the closed cavity, more preferably without exerting a pressure higher than 150 mbar in the closed cavity. In this respect it is assumed that the ambient pressure is the reference pressure (zero bar).

The curable compound preferably comprises a polyurethane reaction mixture, for instance a polyurethane reaction mixture as described in EP-B-0 379 246 (which is included herein by way of reference), which comprises a polyol and an isocyanate component. The curable compound is preferably formulated to produce an elastomer polyurethane material with a density greater than 400 kg/m³ and preferably greater than 500 kg/m³. Lower densities are however also possible. It is particularly possible to add a blowing agent, or a larger quantity of blowing agent, so that a foam will be produced, particularly with a density lower than 400 kg/m³ and more particularly lower than 250 kg/m³.

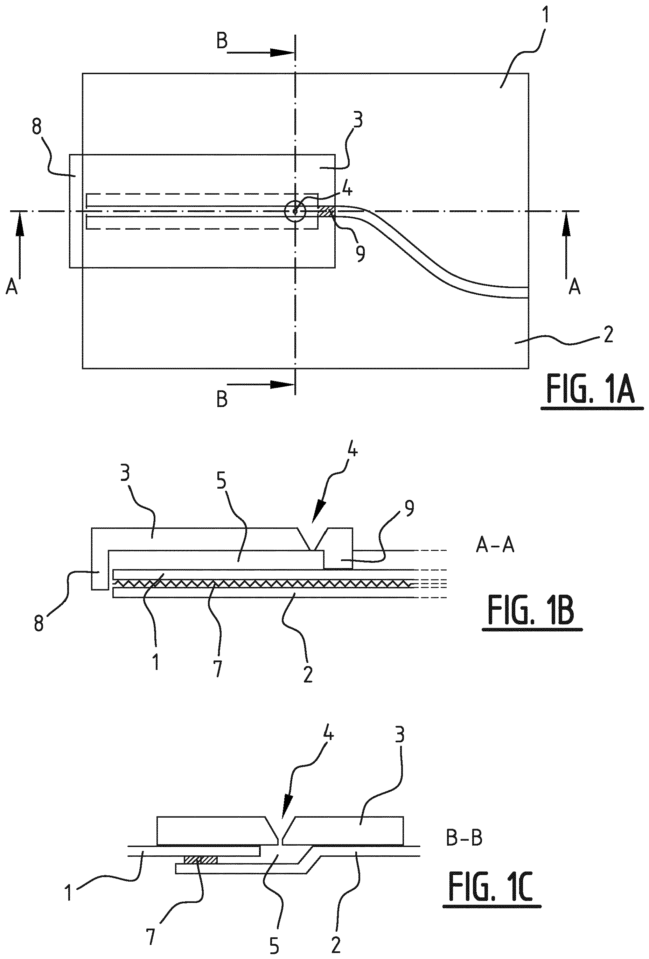

Figure 1 shows a first embodiment of an auxiliary piece 3. Figure 1 shows a first element 1 and a second element 2, which elements 1 and 2 are situated at a predetermined mutual position relative to each other. Figure 1a shows a top view, Figure 1b shows a first section AA and Figure 1c shows a section BB. The second section BB shows that the first element 1 and the second element 2 are connected to each other via connection 7. This connection 7 can be formed by a weld, a chemical connecting layer which differs from the glue discussed above and below. As a further alternative, the connection is formed by one or more screws or bolts. As yet another alternative no physical connection is provided and the elements 1 and 2 are positioned directly on each other, and the glue described above and below will form the physical connection. In the shown embodiment the applied glue will form the secondary connection in addition to the connection 7. An important reason for applying the glue is to provide a seal of the edge or groove which is formed between first element 1 and second element 2. By applying the glue it will be possible to obtain a smooth upper surface which extends from first element 1, over the applied glue layer, to second element 2. This further simplifies integration of the assembly of first and second element 1 and 2 in a greater whole.

When first element 1 and second element 2 are placed in a predetermined relative position, auxiliary piece 3 is positioned on first element and second element 1 and 2. By placing auxiliary piece 3 a cavity 5 is formed which defines the flow boundaries of the glue. Auxiliary piece 3 is manufactured from a soft material, for instance silicone rubber, wherein the technical meaning of soft has been defined in detail above. Because auxiliary piece 3 is manufactured from a soft material, auxiliary piece 3 can be pressed down and connect against first element and second element 1 and 2 well, even when these elements have a significant form tolerance. In practice the first element and second element 1 and 2 can deform due to the welding. Such a deformation can be accommodated by auxiliary piece 3 so that the glue can still be applied optimally.

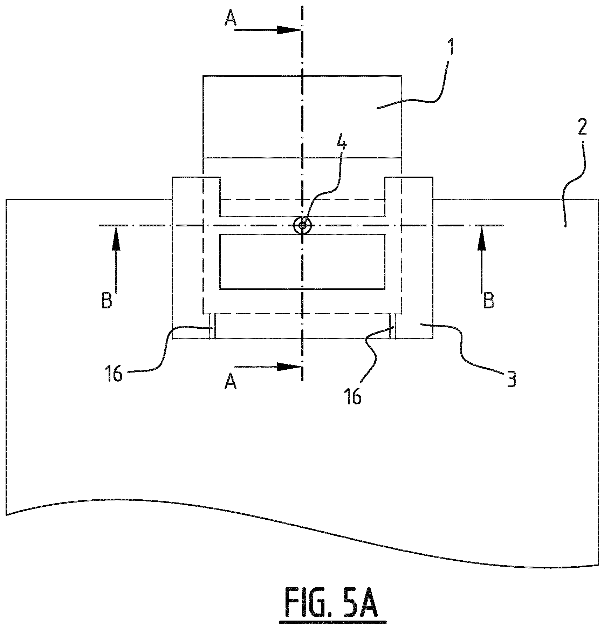

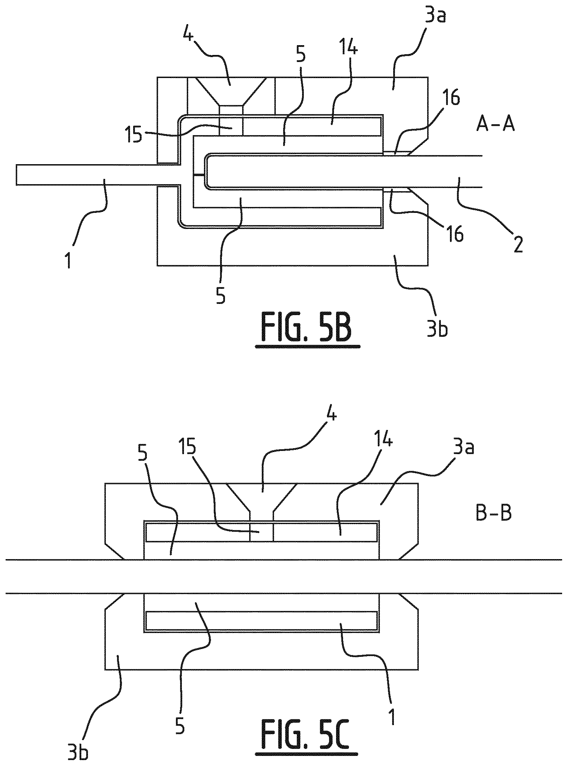

Auxiliary piece 3 has a channel 4. The channel extends from outside to cavity 5. This may be directly and wholly, as in the embodiment of figures 1, 2 and 3. Alternatively, this may be indirectly and partial, as in the embodiment of figure 5. Glue can be introduced into cavity 5 via channel 4. The channel preferably takes an at least partially tapering form. The diameter of the channel will be greater toward the outside than toward cavity 5. The advantage hereof will be discussed further below.

Auxiliary piece 3 is formed so as to wholly bound cavity 5. An edge 8 is therefore provided on one side in the embodiment of Figure 1. The edge 8 of auxiliary piece 3 engages over the edges of the first element and the second element in order to bound cavity 5 at the position of these edges. Provided on the other side is a protrusion 9 which bounds the cavity on the other side. Preferably provided at the position of edge 8 are air outlet openings (not shown in Figure 1). The channel 4 is preferably placed in a zone close to protrusion 9. When glue is introduced into cavity 5, the glue will fill cavity 5 from protrusion 9 to the edge. Air will be pushed out of the cavity via the air outlet openings which are situated at the position of edge 8. The cavity can thus be completely filled in simple manner.

Referring to Figure 1, the skilled person will appreciate that auxiliary piece 3 allows a glue layer to be applied, also when first element 1 and second element 2 have a non-level form. Figure 1b shows that cavity 5 lies substantially horizontally. The skilled person will appreciate that the form taken on by the glue layer is determined by the auxiliary piece and the first element and the second element, such that other forms, for instance a cavity extending at an angle, can also be filled with glue.

Figure 1 shows an embodiment wherein the auxiliary piece functions to delimit a cavity 5 in which a cavity wall lies substantially in line with two substantially panel-like elements 1 and 2 which lie substantially in line with each other. In an alternative embodiment (not shown) the two substantially panel-like elements 1 and 2 lie parallel against each other, for instance laminated glass. Such panel-like elements 1 and 2 can be glued to each other at the position of an edge using the above described auxiliary means. Laminated glass can for instance be provided such that, at the position of predetermined zones of the edge, the laminating film stops at a distance from the edge, for instance 10 mm to 25 mm from the edge. This creates at the position of the edge a cavity between the two elements 1 and 2 which is delimited at the position of the edge by the auxiliary piece and which is delimited opposite the auxiliary piece by the laminating film.

The auxiliary piece according to the invention is formed and provided such that only a negligible bond results between the auxiliary piece and the glue. The auxiliary piece can hereby be removed after at least partial curing of the glue so as to be used in a subsequent gluing cycle with elements of similar form. The auxiliary piece thereby functions as a mould. More specifically, the auxiliary piece forms an elastic mould with runner, which mould delimits only a portion of the cavity for the glue while the remaining portion is delimited by elements to be glued.

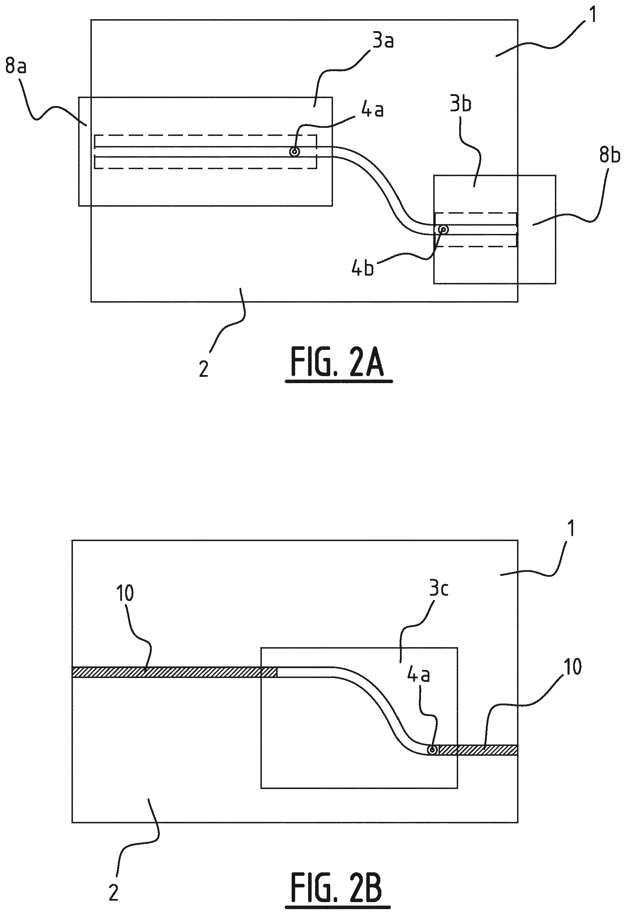

Figure 2a shows a further illustration of the manner in which a plurality of auxiliary pieces 3a and 3b can be used to glue first element 1 and second element 2 together at different locations. In Figure 2a a left-hand location is covered by auxiliary piece 3a and a right-hand location by auxiliary piece 3b. This creates two cavities which can each be filled separately via channels 4a and 4b. Figure 2b shows how a glue layer 10 is formed. A third auxiliary piece 3c can then be placed over a middle segment in order also to glue the middle segment. Complex forms and greater wholes can thus be connected to each other and finished in optimal manner. The auxiliary piece 3 which is manufactured from a soft material plays an important part here in accommodating tolerances in form and relative position of the first element and the second element.

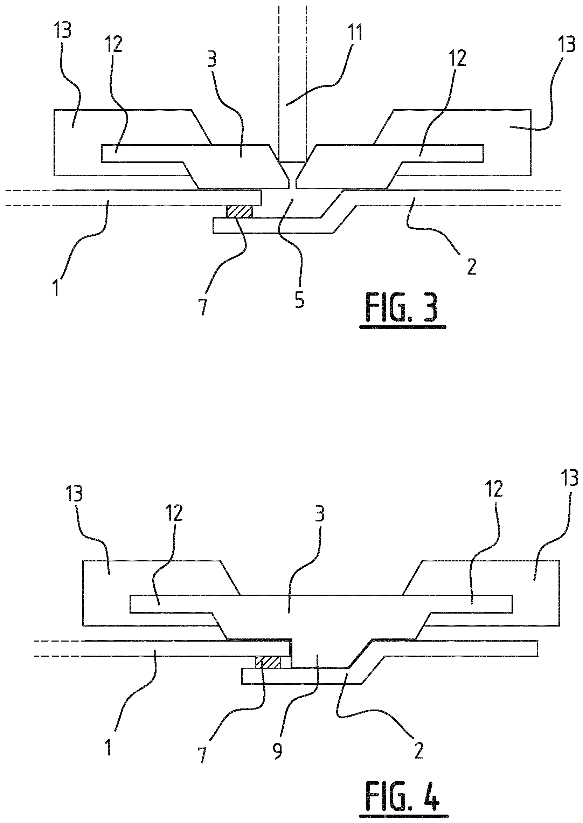

Figure 3 shows that auxiliary piece 3 can be provided with handling edges 12. Via the handling edges the auxiliary piece 3 can be held by a handling means 13. The handling means 13 is for instance a plastic or metal construction which is provided at a distal end of a robot arm so that auxiliary piece 3 can be held and positioned relative to the first and the second element by the robot arm. Auxiliary piece 3 can be pressed against the first and second element via the handling means 13. Handling means 13 forms together with the robot arm the pressing means. By applying a predetermined pressure to auxiliary piece 3, auxiliary piece 3 will deform such that it wholly encloses the cavity.

Figure 3 further shows the glue injector 11. Glue injector 11 typically has a tubular end. This tubular end of glue injector 11 is preferably moved toward the channel 4 by a robot. Because channel 4 has a tapered form, glue injector 11 will automatically be centred at least partially relative to the channel when the glue injector is moved toward channel 4. Owing to the elasticity of auxiliary piece 3, channel 4 will further deform at least partially so that the channel connects fully against the edges of glue injector 11. Glue injector 11 can thus be brought into connection with cavity 5 without further connecting pieces in order to introduce glue into cavity 5.

In the context of this description the term robot is interpreted very broadly, and any mechanical construction which can realize an automated movement will be deemed a robot.

Figure 4 shows a cross-section of the auxiliary piece 3 at the position of protrusion 9. Figure 4 shows here that protrusion 9 substantially wholly closes the cavity. Owing to the elasticity of the material of auxiliary piece 3, a good seal will here also be obtained, also when the form of first element 1 and second element 2 differs from the form of protrusion 9.

Figure 5 shows a further embodiment of the invention. Figure 5a shows a top view, Figure 5b shows a first cross-section and Figure 5c shows a second cross-section of this embodiment. In this embodiment auxiliary piece 3 is formed from two parts. These two parts are designated in Figure 5b and Figure 5c with reference numerals 3a and 3b. These two parts co-act so as to define a cavity 5. With this, this embodiment differs from that shown in Figure 2a. In Figure 2a the first auxiliary piece 3a defines a first cavity together with first element 1 and second element 2. The second auxiliary piece 3b defines, separately of first auxiliary piece 3a, a second cavity with the first element 1 and the second element 2. In the embodiment of Figure 5 the first auxiliary piece 3a and the second auxiliary piece 3b will each provide for part of the delimitation of cavity 5. In other words, in the embodiment of figure 5 auxiliary piece 3 is made from two parts.

In Figure 5a the auxiliary pieces 3a and 3b are used to fix a component 1 to a plate 2. The glue which is introduced into cavity 5 is here primarily intended to realize the connection between component 1 and plate 2. Component 1 forms the first element and plate 2 forms the second element. In the embodiment of Figure 5 component 1 and plate 2 are clamped between the two parts of auxiliary piece 3. The two parts of auxiliary piece 3 hereby also provide at least partially for the relative positioning of component 1 and plate 2.

Figure 5b shows that channel 4 is formed on auxiliary piece 3a. Channel 4 has a tapered form. Channel 4 extends in line with an opening 15, such that channel 4 and opening 15 extend together between cavity 5 and the outside. In this embodiment component 1 has a plate-like segment 14. This plate-like segment has a connection side which faces toward the second element 2. Cavity 5 extends at least partially between the connection sides and second element 2. Cavity 5 is delimited or defined by auxiliary piece 3a at the position of the edges of plate-like segment 14. Auxiliary piece 3a further lies against plate-like segment 14, more specifically against the side other than the connection side. Because channel 4 is aligned with the opening 15 and because auxiliary piece 3a lies against the plate-like segment, glue can be introduced via the channel and via the opening into the cavity. Because the auxiliary piece is manufactured from a soft material, it will be possible in simple manner to realize the automatic connection of the glue injector without further connecting pieces. This is because the glue injector can be correctly coupled to the channel in simple manner, as described above. The auxiliary piece can also connect or be pressed closely against the other side of the plate-like segment at the position of the opening so that no leaks occur between auxiliary piece and plate-like segment. The skilled person will appreciate that connecting the same glue injector directly to opening 15 would be extremely difficult.

At the position of the underside of second element 2 the second part of auxiliary piece 3b will delimit the cavity at the position of the edges of component 1. Air outlet openings 16 are illustrated in Figure 5b. The placement of air outlet openings 16 is chosen so as to allow flow of the glue from channel 4 to fill the whole space 5. Figure 5c shows a further cross-section and illustrates how the two auxiliary pieces 3 delimit the cavity 5 at the position of the sides of first element 1. Cavity 5 extends on either side of second element 2.

The skilled person will appreciate on the basis of the exemplary embodiments given above that many further applications can be envisaged in which auxiliary pieces 3, manufactured from an elastic material, can at least partially delimit a cavity 5 for glue on one hand and on the other can comprise a channel to facilitate simple connection of a glue injector 11. This allows elements 1 and 2 to be connected to each other in controlled manner in different ways, with different forms. This can be automated in simple manner because tolerances in form and in relative position of the first element and the second element can be accommodated in simple manner by the auxiliary piece. A glue injector can also be connected to the cavity in simple manner in order to fill the cavity. All this allows automation of a low-pressure glue injection system in optimal manner.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. Auxiliary piece for gluing a first element and a second element in a predetermined relative position, wherein the auxiliary piece is formed to delimit a portion of a gluing zone such that, after the first element and the second element have been placed in the predetermined relative position and the auxiliary piece has been placed thereon, a cavity is delimited by the first element, the second element and the auxiliary piece, wherein the auxiliary piece has a channel which extends from the cavity to the outside such that a glue injector is able to introduce the glue into the cavity from outside via the channel, wherein the auxiliary piece is manufactured from a material with a hardness lower than 50 Shore D.

2. Auxiliary piece according to claim 1, wherein the channel takes an at least partially conical form so that the opening to the outside has a greater diameter than the opening to the cavity.

3. Auxiliary piece according to claim 1 or 2, wherein the channel is formed as a bore extending through the auxiliary piece from a first outer surface of the auxiliary piece to a second outer surface of the auxiliary piece.

4. Auxiliary piece according to any one of the foregoing claims, wherein the channel is formed round an axis which extends in a predetermined direction.

5. Auxiliary piece according to the foregoing claim and claim 3, wherein the predetermined direction lies at an angle to the first and/or second outer surface which is greater than 10°, preferably greater than 45°, more preferably greater than 60°, most preferably about 90°.

6. Auxiliary piece according to any one of the foregoing claims, wherein the auxiliary piece is manufactured from a material with a hardness lower than 90 Shore A, preferably lower than 75 Shore A, more preferably lower than 60 Shore A, most preferably lower than 50 Shore A.

7. Auxiliary piece according to any one of the foregoing claims, wherein the auxiliary piece is formed so that the cavity has air outlet openings which are positioned in a zone lying opposite the channel.

8. Auxiliary piece according to any one of the foregoing claims, wherein the auxiliary piece comprises two parts for clamping the first element and second element at least partially between the two parts.

9. Auxiliary piece according to any one of the foregoing claims, wherein the first element has a plate-like segment with two opposite sides, wherein a first of the sides at least partially defines the cavity and wherein the plate-like segment has an opening which extends between the opposite sides, wherein the auxiliary piece is provided to lie against a second of the sides and wherein the channel lies in line with the opening so that glue can flow via the channel and via the opening into the cavity.

10. Auxiliary piece according to any one of the foregoing claims, comprising a cavity zone which is formed by a portion of the outer surface of the auxiliary piece, which cavity zone delimits a portion of the cavity, which cavity zone is wholly surrounded by a connecting zone with a predetermined minimum width, which connecting zone is formed to lie closely against the first element and the second element.

11. Device comprising an auxiliary piece according to any one of the foregoing claims, wherein the device comprises:
- a holder for holding the first element and the second element in the predetermined relative position and for holding the auxiliary piece for the purpose of delimiting the cavity; and
- a glue injector which is movable toward the channel in order to introduce glue via the channel into the cavity.

12. Device according to the foregoing claim, further comprising a pressing unit for pressing the auxiliary piece against the first element and the second element.

13. Device according to the foregoing claims, further comprising a glue feed unit for feeding glue to the glue injector, wherein the glue comprises a compound with a dynamic viscosity, measured at a shear rate of 1/s, lower than 35,000 mPa.s when it comes to lie on at least a part of the first and second element.

14. Method for applying glue, comprising the steps of:
- positioning a first element and a second element in a predetermined relative position;
- placing an auxiliary piece manufactured from a material with a hardness lower than 50 Shore D on the first element and the second element, such that a cavity is delimited by the first element, the second element and the auxiliary piece;
- moving a glue injector toward a channel of the auxiliary piece, which channel extends between the cavity and the outside, in order to connect the glue injector to the channel; and
- filling the cavity with glue.

15. Method according to the foregoing claim, further comprising of pressing the auxiliary piece against the first element and the second element before filling the cavity with glue.
